Europäisches Patentamt

European Patent Office

Office européen des brevets

(19)

(11) **EP 0 762 140 B1**

(12) **EUROPEAN PATENT SPECIFICATION**

(45) Date of publication and mention
of the grant of the patent:
**25.11.1998 Bulletin 1998/48**

(51) Int Cl.⁶: **G01S 13/93**, G08G 1/16

(21) Application number: **96113261.0**

(22) Date of filing: **19.08.1996**

(54) **Position sensing system for vehicles**

Positionserkennungsystem für Fahrzeuge

Système de détection de position pour véhicules

(84) Designated Contracting States:
**DE FR GB IT**

(30) Priority: **25.08.1995 JP 240908/95**

(43) Date of publication of application:
**12.03.1997 Bulletin 1997/11**

(73) Proprietor: **KOYO SEIKO CO., LTD.**
**Chuo-ku Osaka 542 (JP)**

(72) Inventors:
• **Nishizaki, Katsutoshi**
  **Chuo-ku, Osaka 542 (JP)**
• **Goto, Yoshihiro**
  **Chuo-ku, Osaka 542 (JP)**
• **Nakano, Shiro**
  **Chuo-ku, Osaka 542 (JP)**

(74) Representative: **Hering, Hartmut, Dipl.-Ing.**
**Patentanwälte**
**Berendt, Leyh & Hering**
**Innere Wiener Strasse 20**
**81667 München (DE)**

(56) References cited:
**EP-A- 0 355 490          GB-A- 2 205 463**

• **PATENT ABSTRACTS OF JAPAN vol. 016, no. 460 (P-1427), 24 September 1992 & JP-A-04 164281 (OKI ELECTRIC IND CO LTD), 9 June 1992,**

## Description

The present invention relates to a system for sensing the relative position between vehicles, and is available to prevent one vehicle from colliding with another vehicle on the basis of the sensed relative position.

From GB-A-2 205 463 there is known a system for sensing a relative position between vehicles as described in the preamble of claim 1.

Among the various systems for sensing the relative position between vehicles, there is a system wherein a laser radar wave, ultrasonic wave, or the like, is emitted from one vehicle to another vehicle and wherein the relative position is sensed on the basis of the reflected wave.

However, when the relative position is sensed on the basis of the reflected wave from the other vehicle, sensing precision and reliability are significantly affected by the surface properties, such as color, luster and roughness of the other vehicle, and by the relative angle between the two vehicles. Although various means for overcoming this drawback have been proposed, they are problematic due to system complexity and increased system size and cost, in addition, excessive responsiveness is sacrificed.

According to an another system there is processed a photographic image of the other vehicle to determine whether the other vehicle is approaching the one vehicle or not.

However, the photographic image of the other vehicle is affected by weather and other factors. In addition, the necessity of image processing results in a complicated system constitution and diminished cost merit.

There is a still another system wherein a pair of markers, which emit infrared rays, are provided at a given left-right interval on the other vehicle, a camera for capturing the infrared rays from the markers is provided on one vehicle, and the captured image is processed to determine the relative position of the other vehicle to one vehicle on the basis of the left-right distance of the infrared rays in the image (JP-A-HEI 4-164281).

However, accurate determination of the relative position is impossible because the left-right distance of the infrared rays in the image changes as the relative angle of the two vehicles changes. Again, in cases where a plurality of other vehicles are involved, it is necessary to determine which of the other vehicles the image corresponds with; therefore, infrared rays are emitted from one vehicle to the other vehicle, and then the infrared rays are emitted from the marker after a given period of time following the former emission. This results in poor responsiveness as well as a complicated system constitution and decreased cost merit. Again, the necessity of image processing further decreases the cost merit.

The object of the present invention is to provide a position sensing system for vehicles overcoming the above problems.

According to the present invention there is provided a system for sensing a relative position between vehicles, as set out in claim 1.

According to the present invention, each vehicle calculates the relative position of the other vehicle to itself on a horizontal plane by triangulation on the basis of the position sensing ray from the other vehicle, whereby the relative position can be sensed without being affected by the other vehicle's color, luster and surface properties, the relative angle between the two vehicles, and weather, and without the need of image processing. It is therefore possible to increase sensing precision, reliability and responsiveness, and reduce size and cost with a simple system constitution.

A preferred embodiment of the system according to the present invention, is set out in claim 2.

According to this preferred embodiment, the vertical distance between the ray receiving position of the one vehicle and the ray emitting position of the other vehicle is a known preset distance, and the ray image forming position coincide with a reference position on the image forming surface of the one vehicle, when the ray emitting position of the other vehicle is at a preset position horizontally apart from the ray receiving position of the one vehicle. It is therefore possible to make the two-dimensional coordinate of the ray emitting position of the other vehicle on a horizontal plane correspond to the two-dimensional coordinate of the ray image forming position on the image forming surface of the one vehicle. Consequently, by memorizing the relationship between the coordinates, and by making the output from the means for receiving the position sensing ray correspond to the ray image forming position on the image forming surface, it is possible to make the output correspond to the ray emitting position, i.e., the relative position of the other vehicle having the means for emitting the position sensing ray to the one vehicle. This enables the determination of the relative position of the other vehicle to the one vehicle on the basis of the principle of triangulation.

Furthermore, it is possible to accurately sense the relative position of the other vehicle to the one vehicle, even when the relative angle between the two vehicles changes during a curve run.

A further preferred embodiment of the invention is set out in claim 3.

According to this preferred embodiment, the relative position of the other vehicle is not updated when the transverse distance from the one vehicle to the other vehicle exceeds the preset value. This ensures that the other vehicle, which is, for example, free from the possibility of collisions, is excluded from the subject of sensing.

Again, when the transverse distance from the one vehicle to the other vehicle is not longer than the preset value and when the output time interval of the comparison signal is shorter than the reference time interval corresponding to the time interval of emitting the position sensing ray, a plurality of other vehicles are present in the range wherein the transverse distance from one vehicle is shorter than the preset value. In this case, when the current longitudinal distance from the one vehicle to the other vehicle adjacent to left rear or right rear of the one vehicle is shorter than the memorized longitudinal distance from one vehicle to the other vehicle adjacent to left rear or right rear of the one vehicle, the current relative position of the other vehicle is more approximate to the one vehicle than the previous position of the other vehicle. Consequently, the memorized position of the other vehicle is updated by the current position of the other vehicle.

Again, when the transverse distance from the one vehicle to the other vehicle is not longer than the preset value and the comparison signal output time interval is not shorter than the reference time interval corresponding to the position sensing ray emitting time interval, only one vehicle is present in the range wherein the transverse distance from the one vehicle is shorter than the preset value. In this case, it can be judged that the other vehicle adjacent to left rear or right rear of the one vehicle keeps a constant distance or is going away from the one vehicle. Consequently, the memorized position of the other-vehicle is updated by the current position of the other vehicle.

This embodiment contributes to preventing one vehicle from colliding with another vehicle at low costs even in cases where a plurality of other vehicles are involved, because the position of the other vehicle most adjacent to left rear or right rear of the one vehicle can be sensed without system complication.

According to the position sensing system of the present invention, it is possible to increase precision, reliability and responsiveness in the sensing of the relative position between vehicles, with reducing size and cost. In addition, the relative position between vehicles can be accurately sensed, even when their relative angle changes during a curve run. Furthermore, in cases where a plurality of other vehicles are involved, the present system is capable of sensing the position of the other vehicle most adjacent to left rear or right rear of the one vehicle at low costs without system complication, and thus contributes to avoiding mutual collisions.

BRIEF DESCRIPTION OF THE DRAWINGS

FIG. 1 (1) is a plane view of vehicles constituting the position sensing system of the present invention; FIG. 1 (2) is a side view of the vehicles.

FIG. 2 (1) illustrates the constitution of the ray emitting device of the position sensing system of the present invention; FIG. 2 (2) illustrates the constitution of the ray receiving device of the system; FIG. 2 (3) illustrates the constitution of the arithmetic unit of the system.

FIG. 3 illustrates the act of the position sensing system of the present invention.

FIG. 4 is a flow chart showing the position sensing process in the position sensing system of the present invention.

FIG. 5 is a plane view illustrating a running state of vehicles constituting the position sensing system of the present invention.

FIG. 6 shows the position sensing range for other vehicles relative to the one vehicle in the position sensing system of the present invention.

FIG. 7 illustrates the constitution of a ray emitting device and ray receiving device of a modified embodiment of the present invention.

An embodiment of the present invention as applied to a sensing system for other vehicles adjacent to left rear or right rear of one vehicle is hereinafter described with reference to drawings.

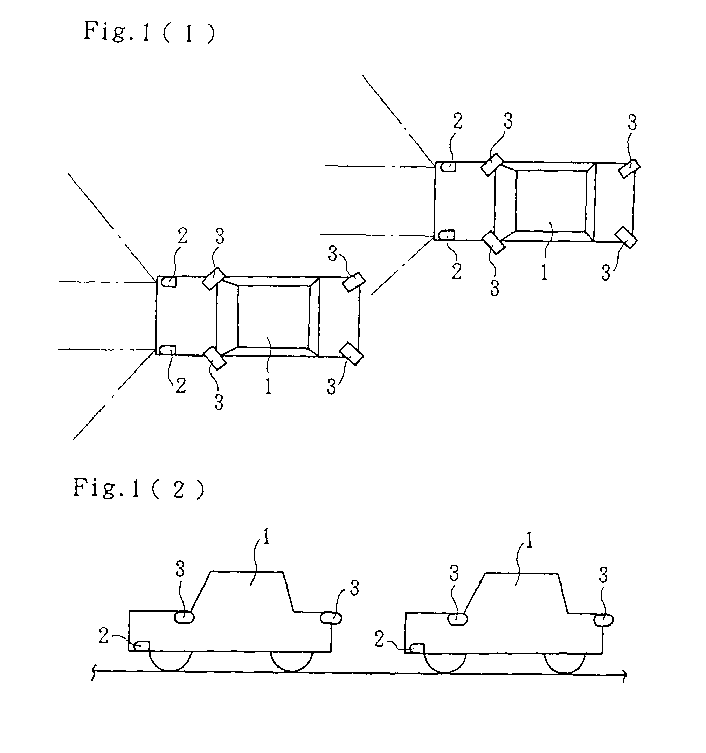

Each vehicle 1 illustrated in FIGS. 1 (1) and 1 (2) has ray emitting devices 2 for emitting position sensing ray and ray receiving devices 3 for receiving the position sensing ray. The ray emitting devices 2 are attached to the left and right of the body's front end. The ray receiving devices 3 are attached to the left and right of the passenger compartment and also left and right of the body's rear end. Consequently, each vehicle 1 can receive the position sensing ray emitted by the ray emitting device 2 of the other vehicle 1 adjacent to left rear or right rear of itself.

In the present embodiment, the other vehicle adjacent to left rear or right rear of the one vehicle is the other vehicle located on the outward and backward side of the passenger compartment of the one vehicle. Since any other vehicle on the forward side of the passenger compartment of the one vehicle is visible by the driver of the one vehicle, so that the necessity for sensing it by the present system is low.

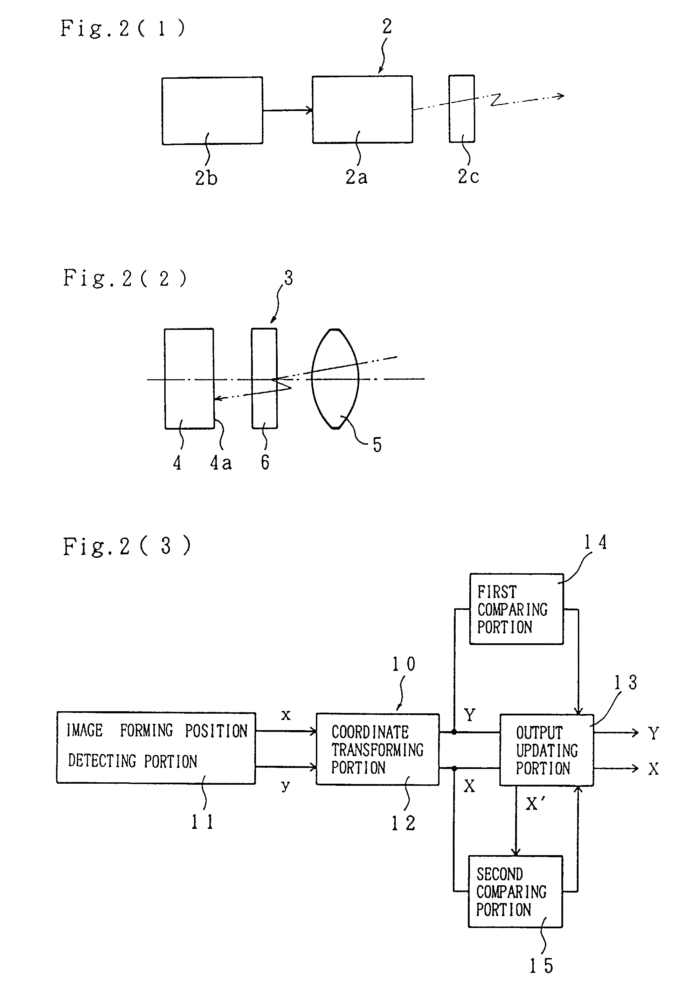

The ray emitting device 2 emits an infrared ray as the position sensing ray toward the forward and outward side of the body. For example, as illustrated in FIG. 2 (1), the ray emitting device 2 is constituted of a light emitting diode 2a for emitting the infrared ray, a driving circuit 2b for driving the light emitting diode 2a, and a diffusion plate 2c for diffusing the infrared ray emitted by the light emitting diode 2a. The driving circuit 2b drives the light emitting diode 2a in a manner such that the position sensing ray is emitted at a preset reference time interval Ta.

As illustrated in FIG. 2 (2), the ray receiving device 3 has a two-dimensional position sensing semiconductor device (two-dimensional PSD) 4, a converging lens, and a filter 6 between the position sensing device 4 and converging lens 5. The position sensing device 4 has a ray image forming surface 4a, on which the position sensing ray from the other vehicle forms its image after being converged by the converging lens. The position sensing device 4 can output an electric current signal corresponding to the two-dimensional coordinate of the ray image forming position on the image forming surface 4a as a position sensing signal. This position sensing device 4 can be a commonly known device. The filter 6 has a ray transmission peak corresponding to the infrared wavelength of the position sensing ray emitted by the ray emitting device 2.

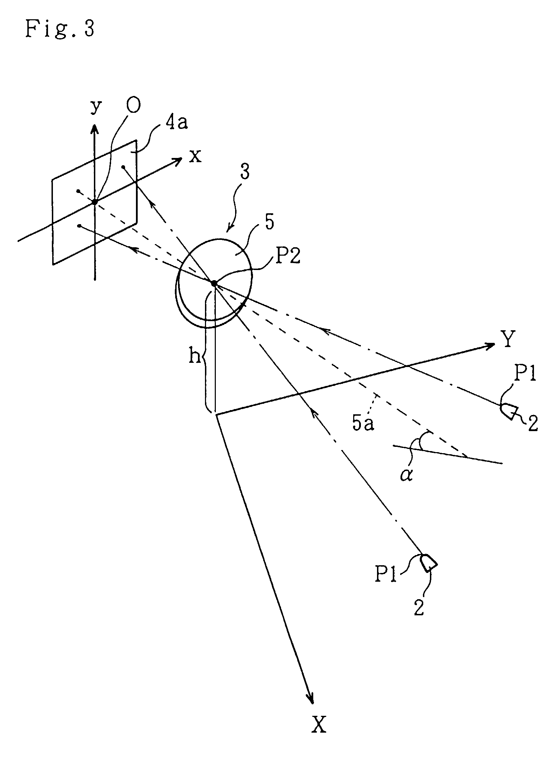

FIG. 3 illustrates two ray emitting devices 2 and one ray receiving device 3 for receiving the position sensing ray (indicated by alternate long and short dash line) emitted by each ray emitting device 2. As illustrated in FIG. 3, each ray emitting position P1 of each ray emitting device 2 is set below the ray receiving position P2 of the ray receiving device 3, so that both positions P1, P2 are set vertically apart from each other by a preset distance h. Provided that the converging lens 5 of the ray receiving device 3 is a thin lens, the ray receiving position P2 is at the center of the converging lens 5. Each ray emitting position P1 is at the center of the ray emitting opening of each ray emitting device 2. The concrete value of the preset distance h can be set according to the height of each vehicle 1 and the sensing range for other vehicles.

The optical axis 5a of the converging lens 5 is inclined at a preset angle $\alpha$ with respect to the horizontal plane in a vertical plane. The intersection point of the optical axis 5a and the above-mentioned image forming surface 4a serves as a reference position O. The optical axis 5a crosses the image forming surface 4a at right angles. The reference position O constitutes the zero point of the two-dimensional coordinate of the ray image forming position on the image forming surface 4a. The two-dimensional coordinate corresponds to the output from the ray receiving device 3 as stated above. Consequently, the position sensing ray forms its image at the reference position O of the one vehicle, when the ray emitting position P1 on the other vehicle is on the optical axis 5a, i.e., the ray emitting position P1 on the other vehicle is at a preset position horizontally apart from the ray receiving position P2 on the one vehicle. Therefore, the two-dimensional coordinate of the ray image forming position on the image forming surface 4a of the one vehicle corresponds to the two-dimensional coordinate of the ray emitting position P1 of the other vehicle on the horizontal plane. Accordingly, when the two-dimensional coordinate of the ray image forming position on the image forming surface 4a is indicated by the xy coordinate system, and the two-dimensional coordinate of the ray emitting position P1 on the horizontal plane is indicated by the XY coordinate system, the following equations hold:

$$X = (a_x \cdot x + b_x \cdot y)/(a \cdot x + b \cdot y + c)$$

$$Y = (a_y \cdot x + b_y \cdot y)/(a \cdot x + b \cdot y + c)$$

In these equations, $a_x$, $a_y$, $b_x$, $b_y$, a, b and c are parameters depending on the above-described preset angle $\alpha$ and preset distance h. In the present embodiment, the zero point of the XY coordinate system of the ray emitting position P1 is set below the ray receiving position P2 at a preset distance h. The Y coordinate of the ray emitting position P1 is the transverse distance from the one vehicle to the other vehicle. The X coordinate of the ray emitting position P1 is the longitudinal distance from the left or right of the front of the passenger compartment of the one vehicle or else from the left or right of the rear end of the one vehicle to the other vehicle adjacent to left rear or right rear of the one vehicle. Accordingly, the relative position of the other vehicle to the position of the one vehicle on the horizontal place can be calculated by triangulation.

Each vehicle 1 is provided with an arithmetic unit 10 for calculating the ray emitting position on the horizontal plane, i.e., the relative position of the other vehicle to the position of the one vehicle, on the basis of the above equations and the output from the position sensing device 4. As shown in the function block chart of FIG. 2 (3), the arithmetic unit 10 has an image forming position detecting portion 11, a coordinate transforming portion 12, an output updating portion 13, a first comparing portion 14, and a second comparing portion 15. The image forming position detecting portion 11 detects the two-dimensional coordinate (x, y) of the ray image forming position on the image forming surface 4a, on the basis of the position sensing signal from the position sensing device 4. The coordinate transforming portion 12 transforms the two-dimensional coordinate (x, y) of the ray image forming position into the two-dimensional coordinate (X, Y) of the ray emitting position P1 on the basis of the above equations. The output updating portion 13 updates the two-dimensional coordinate (X, Y) of the ray emitting position P1 and outputs the updated result. The first comparing portion 14 compares a transverse distance to a value and outputs a comparison signal as described later, while the second comparing portion 15 compares a longitudinal distance to a value as described later. The arithmetic unit 10 can be configured with a computer having a central processing unit, a memory, and an input/output interface. On the basis of a control program, which includes the above equations and stored in the memory, the following calculation can be performed by the central processing unit.

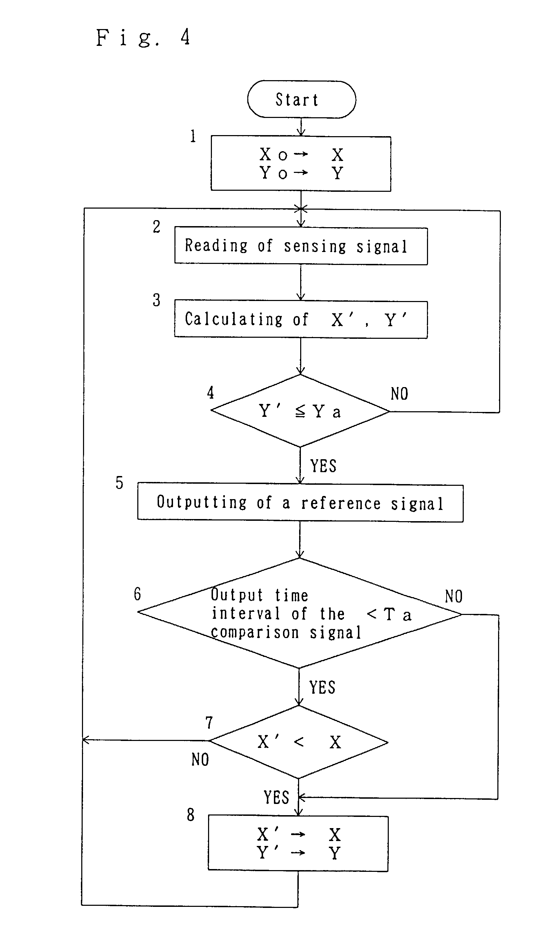

The process in the arithmetic unit 10 is hereinafter described with reference to the flow chart shown in FIG. 4.

First, an initial value Xo is memorized as the longitudinal distance X from the one vehicle to another vehicle adjacent to left rear or right rear of the one vehicle. In addition, an initial value Yo is memorized as the transverse distance Y from the one vehicle to the other vehicle adjacent to left rear or right rear of the one vehicle (step 1). These initial values Xo and Yo can be infinitely high.

Next, the position sensing signal from the position sensing device 4 is read by the image forming position detecting portion 11 and coordinate transforming portion 12 (step 2).

On the basis of the position sensing signal, the current longitudinal distance X' from the one vehicle to the other vehicle adjacent to left rear or right rear of the one vehicle, and the transverse distance Y' from the one vehicle to the other vehicle, i.e., the relative position of the other vehicle to the position of the one vehicle, is calculated (step 3).

In this calculation, the longitudinal distance X' obtained on the basis of the position sensing signal from the ray receiving device 3 at the left or right of the front of the passenger compartment is equalized to the longitudinal distance X' obtained on the basis of the position sensing signal from the ray receiving device 3 at the left or right of the rear end of the body. For example, when the ray receiving device 3 at the left or right of the front of the passenger compartment serves as a reference, the actual longitudinal distance obtained on the basis of the position sensing signal from the ray receiving device 3 at the left or right of the front of the passenger compartment is taken as the value X' calculated in step 3, while the sum of the actual longitudinal distance obtained on the basis of the position sensing signal from the ray receiving device 3 at the left or right of the rear end of the body and the longitudinal distance between the front of the passenger compartment and the rear end of the body is taken as the value X' calculated in step 3.

Next, the first comparing portion 14 judges whether the current transverse distance Y' from the one vehicle to the other vehicle is shorter than a preset value Ya or not (step 4).

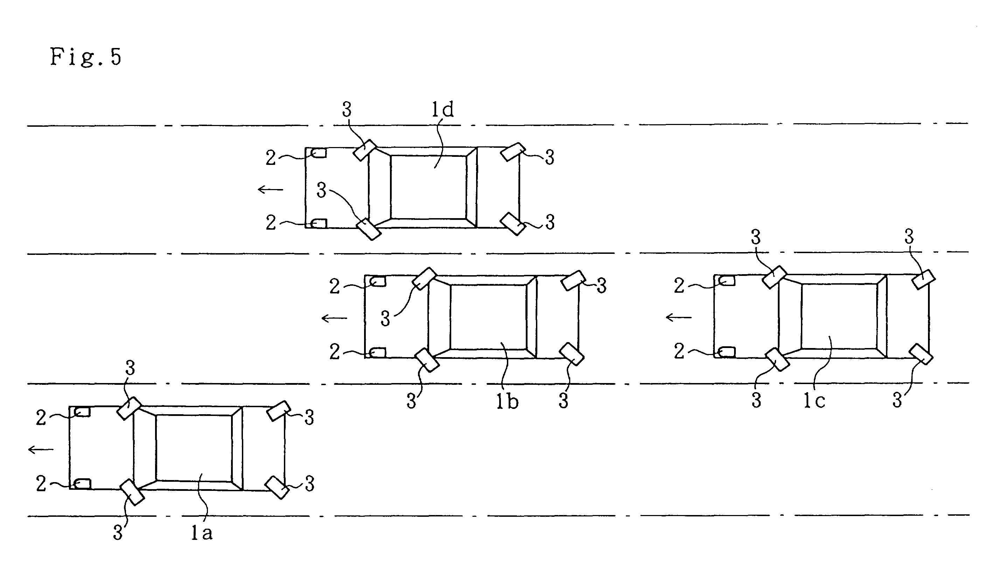

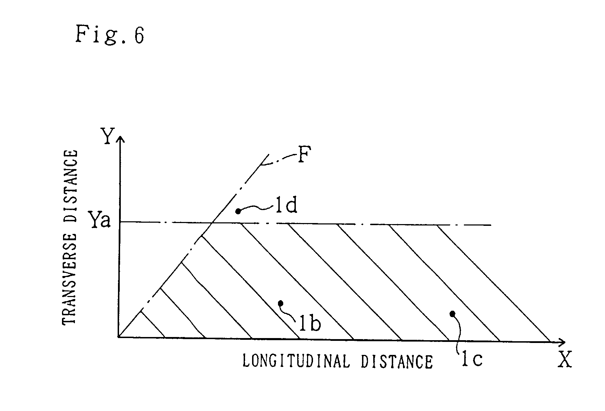

For example, FIG. 5 shows a case wherein four vehicles 1a, 1b, 1c and 1d are running to the left as shown by arrows on a road with 3 lanes. In this case, the leading vehicle 1a on the left lane is taken as the one vehicle, and the other vehicles 1b, 1c and 1d run on the central or right lane. In addition, for the purpose of avoiding a collision, the other vehicles 1b and 1c on the central lane are exclusively covered by the position sensing range. In this case, the preset value Ya is set according to the width of the lane. Accordingly, as indicated by hatching in FIG. 6, the sensing range for the other vehicles relative to the one vehicle is not greater than the preset value Ya with respect to the transverse direction, and is backward from the front end (indicated by alternate long and short dash line F in FIG. 6) of the ray receiving range of the ray receiving device 3 with respect to the longitudinal direction. The sensing range covers the other vehicles 1b and 1c on the central lane but excludes the other vehicle 1d on the right lane.

When the current transverse distance Y' from the one vehicle to the other vehicle exceeds the preset value Ya in step 4, the process is returned to step 2.

For example, in FIG. 5, when the position sensing ray received by the ray receiving device 3 of the one vehicle 1a is exclusively from the other vehicle 1d on the right lane, the process is returned to step 2.

When the current transverse distance Y' from the one vehicle to the other vehicle is not longer than the preset value Ya in step 4, the first comparing portion 14 transmits a comparison signal to the output updating portion 13 (step 5).

For example, in FIG. 5, when the position sensing ray from the other vehicle 1b on the forward side of the central lane or from the other vehicle 1c on the backward side of the central lane is received by the ray receiving device 3 of the one vehicle 1a, the comparison signal is transmitted.

The output updating portion 13 judges whether the output time interval of the comparison signal is shorter than the reference time interval Ta corresponding to the emitting time interval of the position sensing ray or not (step 6). When only one other vehicle is present in the range wherein the transverse distance from the one vehicle is not longer than the preset value Ya, the comparison signal output time interval is never shorter than the reference time interval Ta. Consequently, it can be judged that a plurality of other vehicles are present in the range wherein the transverse distance from the one vehicle is not longer than the preset value, when the comparison signal output time interval is shorter than the reference time interval Ta.

For example, in FIG. 5, when the position sensing rays from the other vehicle 1b on the forward side of the central lane and from the other vehicle 1c on the backward side of the central lane are received by the ray receiving device 3 of the one vehicle 1a, the comparison signal output time interval becomes shorter than the reference time interval Ta. In addition, when the other vehicle 1d on the right lane changes its lane to the central lane so as to be located on the outward side of the one vehicle 1a, the comparison signal output time interval becomes shorter than the reference time interval Ta.

When the comparison signal output time interval is shorter than the reference time interval Ta, the second comparing portion 15 judges whether the current longitudinal distance X' from the one vehicle to the other vehicle adjacent to left rear or right rear of the one vehicle is shorter than the memorized longitudinal distance X from the one vehicle to the other vehicle adjacent to left rear or right rear of the one vehicle or not (step 7).

When the current longitudinal distance X' from the one vehicle to the other vehicle is not shorter than the memorized longitudinal distance X in step 7, the process is returned to step 2.

When the current longitudinal distance X' from the one vehicle to the other vehicle is shorter than the memorized longitudinal distance X in step 7, the output updating portion 13 updates the memorized positions X and Y of the other vehicle by the current positions X' and Y' of the other vehicle. The updated positions X and Y are then output as the relative position of the other vehicle to the position of the one vehicle (step 8), after which the process is returned to step 2.

For example, in FIG. 5, when the memorized longitudinal distance X from the one vehicle to the other vehicle adjacent to left rear or right rear of the one vehicle is the initial value Xo, the current longitudinal distance X' from the one vehicle 1a to the other vehicle adjacent to left rear or right rear of the one vehicle 1a is shorter than the memorized longitudinal distance X, whether the current other vehicle is the other vehicle 1b on the forward side of the central lane or the other vehicle 1c on the backward side of the central lane. The memorized positions X and Y of the other vehicle are therefore updated.

When the memorized longitudinal distance X from the one vehicle to the other vehicle is the longitudinal distance from the one vehicle 1a to the other vehicle 1b on the forward side of the central lane, and when the current other vehicle is the other vehicle 1c on the backward side of the central lane, the current longitudinal distance X' from the one vehicle 1a to the other vehicle 1c exceeds the memorized longitudinal distance X. The memorized positions X and Y of the other vehicle are therefore not updated.

When the memorized longitudinal distance X from the one vehicle to the other vehicle is the longitudinal distance from the one vehicle 1a to the other vehicle 1c on the backward side of the central lane, and when the current other vehicle is the other vehicle 1b on the forward side of the central lane, the current longitudinal distance X' from the one vehicle 1a to the other vehicle 1b is shorter than the memorized longitudinal distance X. The memorized positions X and Y of the other vehicle are therefore updated.

When the memorized longitudinal distance X from the one vehicle to the other vehicle is the longitudinal distance from the one vehicle 1a to the other vehicle 1b on the forward side of the central lane, and when the current other vehicle is the other vehicle 1d which is changed its lane from the right lane to the central lane and located in front of the vehicle 1b on the forward side of the central lane, the current longitudinal distance X' from the one vehicle 1a to the other vehicle 1d is shorter than the memorized longitudinal distance X. The memorized positions X and Y of the other vehicle are therefore updated.

When the comparison signal output time interval is not shorter than the reference time interval Ta in step 6, the memorized positions X and y of the other vehicle are updated by the current relative positions X' and Y' of the other vehicle in step 8. The updated positions X and Y are then output as the relative position of the other vehicle to the position of the one vehicle. To be more precise, when the comparison signal output time interval is not shorter than the reference time interval Ta, only one other vehicle is present in the range wherein the transverse distance from the one vehicle is not longer than the preset value Ya. In this case, it can be judged that only one other vehicle adjacent to left rear or right rear of the one vehicle maintains a constant distance or is going away from the one vehicle. Consequently, the memorized positions X and Y of the other vehicle can be updated by the current positions X' and Y' of the other vehicle. The updated X and Y can be then output as the relative position of the other vehicle to the position of the one vehicle.

The output results of the updated positions X and Y can be used for preventing the one vehicle from colliding with other vehicles. For example, when another vehicle is approaching left rear or right rear of one vehicle, the output results can be used to control the steering assistance power generated by the power steering device of the one vehicle in a manner such that the steering operation toward the other vehicle is inhibited.

According to the above constitution, the relative position of the other vehicle to the one vehicle on the horizontal plane is calculated by triangulation on the basis of the position sensing ray from the other vehicle, whereby relative position can be sensed without being affected by the other vehicle's color, luster and surface properties, the relative angle between the two vehicles, and weather, and without the need of image processing. It is therefore possible to increase sensing precision, reliability and responsiveness, and reduce size and cost with a simple system constitution.

Furthermore, according to the above constitution, the vertical distance between the ray emitting position P1 and ray receiving position P2 is a known preset distance h, and the ray image forming position coincide with the reference position O on the image forming surface 4a when the ray emitting position P1 of the other vehicle is at a preset position horizontally apart from the ray receiving position P2 of the one vehicle. It is therefore possible to calculate the relative position of the other vehicle to the position of the one vehicle on the horizontal plane by triangulation. This enables accurate sensing of the relative position of the other vehicle to the position of the one vehicle on the horizontal plane, even when their relative angle changes during a curve run.

This constitution contributes to preventing the one vehicle from colliding with other vehicles at low costs even in cases where a plurality of other vehicles are involved, because the position of the other vehicle most adjacent to left rear or right rear of the one vehicle can be sensed without system complication.

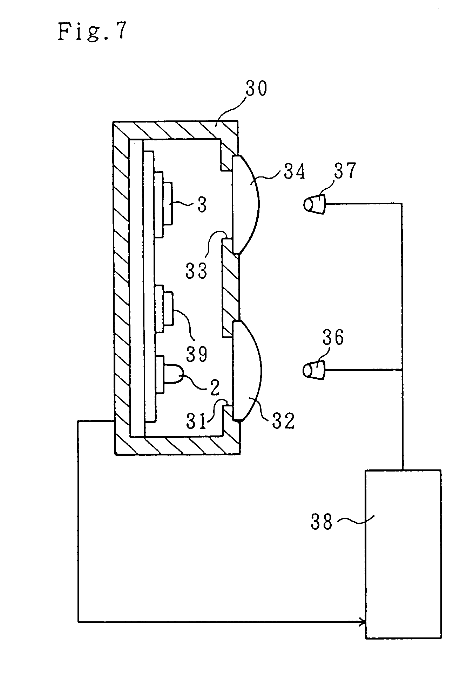

FIG. 7 shows a modified embodiment of the ray emitting device 2 and the ray receiving device 3. This embodiment differs from the above-described embodiment in some aspects. First, the ray emitting device 2 and the ray receiving device 3 are arranged along vertical direction in a case 30. The case 30 has a transparent cover 32 covering a window 31 through which the position sensing ray is emitted by the ray emitting device 2, another transparent cover 34 covering a window 33 through which the position sensing ray enters the ray receiving device 3, and nozzles 36, 37 facing the respective transparent covers 32, 34. Each of the nozzles 36, 37 is connected to a head lamp washer apparatus 38. The case 30 houses a photoelectric sensor 39. When the amount of reflection of the position sensing ray emitted by the ray emitting device 2 on the transparent cover 32 exceeds the preset value due to stain of the transparent cover 32, the sensor 39 transmits a trigger signal to the head lamp washer apparatus 38. Upon receipt of the trigger signal, each of the air nozzles 36, 37 discharges detergent solution to remove the stain from the transparent cover 32, 34. The nozzles 36, 37 can be connected to a window washer apparatus instead of the head lamp washer 38.

The present invention is not limited to the above-described embodiments. For example, with respect to the ray receiving device 3 in the above embodiments, the intersection point of the optical axis 5a of the converging lens 5 and the image forming surface 4a is taken as the reference position O, but this is not essential, as long as the position sensing ray forms its image at the reference position O on the image forming surface 4a when the ray emitting position P1 is at a preset position horizontally apart from the ray receiving position P2. In the above-described embodiments, the present invention is applied to sense the position of another vehicle adjacent to left rear or right rear of one vehicle, but the present invention is also applicable to position sensing for other vehicles at other positions.

## Claims

1. A system for sensing a relative position between vehicles, wherein

   each vehicle (1) comprises:
   means (2) for emitting a position sensing ray to the other vehicle;
   means (3) for receiving the position sensing ray from the other vehicle; and
   means (10) for calculating the relative position of the other vehicle to itself by triangulation on the basis of the received position ray,

   characterized in that
   the ray emitting position and the ray receiving position are set vertically apart from each other by a preset distance (h).

2. A system according to claim 1, wherein

   the means (3) for receiving the position sensing ray has an image forming surface (4a) on which the position sensing ray from the other vehicle forms its image;
   the two-dimensional coordinate of the ray image forming position on the image forming surface (4a) of the one vehicle corresponds to the two-dimensional coordinate of the ray emitting position of the other vehicle on a horizontal plane;
   the output from the means (3) for receiving the position sensing ray corresponds to the two-dimensional coordinate of the ray image forming position on the image forming surface (4a) of the one vehicle;
the position sensing ray forms its image at a reference position (0) of the image forming surface (4a) of the one vehicle, when the ray emitting position on the other vehicle is at a preset position horizontally apart from the ray receiving position on the one vehicle; and
said means (10) for calculating the relative position of the other vehicle to itself performs the calculation on the basis of the relation between the two-dimensional coordinate of the ray image forming position on the image forming surface (4a) of itself and the two-dimensional coordinate of the ray emitting position of the other vehicle on the horizontal plane.

3. The system for sensing a relative position between vehicles according to claim 1 or 2, wherein:

   the position sensing ray is emitted at a preset time interval toward the forward and outward sides from the body of each vehicle (1); and wherein:
   each vehicle (1) has means (10) for memorizing the relative position of the other vehicle, which is adjacent to the left rear or right rear of itself, to itself; means (14) for judging whether the transverse distance from itself to the other vehicle is below a preset value or not; means (14) for outputting a comparison signal when the transverse distance is below the preset value; means (13) for judging whether the output time interval of the comparison signal is shorter than a reference time interval corresponding to the preset time interval or not; means (15) for judging whether the current longitudinal distance from itself to the other vehicle is shorter than the memorized longitudinal distance from itself to the other vehicle or not, when the comparison signal output time interval is shorter than the reference time interval; and means (13) for updating the memorized relative position of the other vehicle to itself by the current relative position of the other vehicle to itself, when the current longitudinal distance from itself to the other vehicle is shorter than the memorized longitudinal distance from itself to the other vehicle and the comparison signal output time interval is not shorter than the reference time interval.

## Patentansprüche

1. System zur Erfassung einer relativen Position zwischen Fahrzeugen, bei dem jedes Fahrzeug (1) folgendes aufweist:

eine Einrichtung (2) zum Abgeben eines Positionserfassungsstrahls zu dem anderen Fahrzeug;

eine Einrichtung (3) zum Empfangen des Positionserfassungsstrahls von dem anderen Fahrzeug; und

eine Einrichtung (10) zum Ermitteln der relativen Position des anderen Fahrzeuges zu sich selbst mittels Triangulation auf der Basis des empfangenen Positionsstrahls,

**dadurch gekennzeichnet,** daß

die Strahlabgabeposition und die Strahlempfangsposition vertikal um einen vorbestimmten Abstand (h) beabstandet sind.

2. System nach Anspruch 1, bei dem

die Einrichtung (3) zum Empfangen des Positionserfassungsstrahls eine Bilderzeugungsoberfläche (4a) hat, auf der der Positionserfassungsstrahl von dem anderen Fahrzeug eine Abbildung bildet;

die zweidimensionale Koordinate der Strahlbild-Erzeugungsposition auf der bilderzeugenden Oberfläche (4a) des einen Fahrzeuges der zweidimensionalen Koordinate der Strahlenabgabeposition des anderen Fahrzeugs auf einer horizontalen Ebene entspricht;

der Ausgang von der Einrichtung (3) zum Empfangen des Positionserfassungsstrahls der zweidimensionalen Koordinate der Strahlbild-Erzeugungsposition auf der bilderzeugenden Oberfläche (4a) des Fahrzeugs entspricht;

der Positionserfassungsstrahl die Abbildung an einer Referenzposition (O) der bilderzeugenden Oberfläche (4a) des einen Fahrzeugs erzeugt, wenn die Strahlabgabeposition am anderen Fahrzeug sich in einer vorgegebenen Position horizontal beabstandet von der Strahlempfangsposition an diesem einen Fahrzeug ist; und

die Einrichtung (10) zur Ermittlung der relativen Position des anderen Fahrzeugs zu sich selbst eine Ermittlung auf der Basis der Beziehung zwischen der zweidimensionalen Koordinate und der Strahlabgabeposition des anderen Fahrzeugs in der horizontalen Ebene vornimmt.

3. System zum Erfassen einer relativen Position zwischen Fahrzeugen nach Anspruch 1 oder 2, bei dem folgendes gilt:

der Positionserfassungsstrahl zu einem vorbestimmten Zeitintervall in Richtung zu den vorderen und äußeren Seiten von der Karosserie jedes Fahrzeuges (1) abgegeben wird, und

jedes Fahrzeug (1) eine Einrichtung (10) zum Speichern der relativen Position des anderen Fahrzeugs hat, welches links hinten oder rechts hinten von sich selbst benachbart ist bezogen auf sich selbst; eine Einrichtung (14) zum Ermitteln, ob der Querabstand von sich selbst zu dem anderen Fahrzeug kleiner als ein vorbestimmter Wert ist oder nicht; eine Einrichtung (14) zum Ausgeben eines Vergleichssignals, wenn der Querabstand kleiner als der Vorgabewert ist; eine Einrichtung (13) zum Ermitteln, ob das Abgabezeitintervall des Vergleichssignals kürzer als ein Bezugszeitintervall entsprechend dem Vorgabezeitintervall ist oder nicht; eine Einrichtung (15) zum Ermitteln, ob der momentane Längsabstand von sich selbst zu dem anderen Fahrzeug kürzer als der gespeicherte Längsabstand von sich selbst zu dem anderen Fahrzeug ist oder nicht, wenn das Vergleichssignal-Ausgabezeitintervall kürzer als das Bezugszeit-Intervall ist; und eine Einrichtung (13) zum Aktualisieren der gespeicherten relativen Position des anderen Fahrzeugs zu sich selbst durch die momentane relative Position des anderen Fahrzeugs zu sich selbst, wenn der momentane Längsabstand von sich selbst zu dem anderen Fahrzeug kürzer als der gespeicherte Längsabstand von sich selbst zu dem anderen Fahrzeug ist und das Vergleichssignal-Abgabezeitintervall nicht kürzer als das Bezugszeit-Intervall ist.

**Revendications**

1. Système de détection d'une position relative entre des véhicules, dans lequel chaque véhicule (1) comprend:

un moyen (2) d'émission d'un rayon de détection de position vers l'autre véhicule;
un moyen (3) de réception du rayon de détection de position provenant de l'autre véhicule; et
un moyen (10) de calcul de la position relative de l'autre véhicule par rapport au premier, par une triangulation sur la base du rayon de position reçu,

caractérisé en ce que
la position d'émission du rayon et la position de réception du rayon sont réglées verticalement et séparées l'une de l'autre par une distance pré-établie (h).

2. Système suivant la revendication 1, dans lequel

le moyen (3) de réception du rayon de détection de position comporte une surface de formation d'image (4a), sur laquelle le rayon de détection de position provenant de l'autre véhicule forme une image;

les coordonnées, suivant deux dimensions, de la position de la formation de l'image du rayon sur la surface de formation d'image (4a) du premier véhicule correspond aux coordonnées, suivant deux dimensions, de la position de formation de l'image de l'autre véhicule, sur un plan horizontal;

la sortie du moyen (3) de réception du rayon de détection de position correspond aux coordonnées, suivant deux dimensions, de la position de la formation de l'image du rayon sur la surface de formation d'image (4a) du premier véhicule;

le rayon de détection de position forme son image en une position de référence (0) de la surface de formation d'image (4a) du premier véhicule, quand la position d'émission du rayon sur l'autre véhicule est en une position pré-établie, séparée horizontalement de la position de réception du rayon sur le premier véhicule; et ledit moyen (10) de calcul de la position relative de l'autre véhicule par rapport au premier réalise le calcul sur la base de la relation entre les coordonnées, suivant deux dimensions, de la position de la formation de l'image du rayon sur la surface de formation d'image (4a) du premier véhicule et les coordonnées, suivant deux dimensions, de la position d'émission du rayon de l'autre véhicule sur le plan horizontal.

**3.** Système de détection de position relative entre véhicules, suivant la revendication 1 ou 2, dans lequel:

le rayon de détection de position est émis à un intervalle de temps prédéterminé vers les côtés avant et latéraux du corps de chaque véhicule (1); et dans lequel:
chaque véhicule (1) comporte un moyen (10) de mise en mémoire de la position relative, par rapport au premier véhicule, de l'autre véhicule qui est voisin de son arrière gauche ou de son arrière droit; un moyen (14) pour juger si la distance transversale du premier véhicule à l'autre véhicule est ou non inférieure à une valeur prédéterminée; le moyen (14) de fourniture d'un signal de comparaison quand la distance transversale est inférieure à la valeur prédéterminée; un moyen (13) destiné à juger si l'intervalle de temps de sortie du signal de comparaison est ou non plus court que l'intervalle de temps de référence correspondant à l'intervalle de temps prédéterminé; un moyen (15) destiné à juger si, oui ou non, la distance longitudinale courante entre le premier véhicule et l'autre véhicule est inférieure à la distance longitudinale entre le premier véhicule et l'autre véhicule, mise en mémoire, quand l'intervalle de temps de sortie du signal de comparaison est plus court que l'intervalle de temps de référence, et un moyen (13) pour mettre à jour la position relative, qui a été mise en mémoire, de l'autre véhicule par rapport au premier avec la position relative courante de l'autre véhicule par rapport au premier, quand la distance longitudinale courante entre le premier véhicule et l'autre véhicule est plus courte que la distance longitudinale, qui a été mise en mémoire, du premier véhicule à l'autre véhicule et que l'intervalle de temps de sortie du signal de comparaison n'est pas plus court que l'intervalle de temps de référence.

Fig.1 ( 1 )

Fig.1 ( 2 )

Fig.2 ( 1 )

Fig.2 ( 2 )

Fig.2 ( 3 )

FIRST COMPARING PORTION

10

Y

13

IMAGE FORMING POSITION DETECTING PORTION

x

COORDINATE TRANSFORMING PORTION

OUTPUT UPDATING PORTION

Y

y

X

X

11

12

X'

SECOND COMPARING PORTION

15

11

Fig.3

# Fig. 4

```
                    ┌──────────┐
                    │  Start   │
                    └──────────┘
                         │
                         ▼
1   ┌──────────────────────────────────┐
    │           X o → X                │
    │           Y o → Y                │
    └──────────────────────────────────┘
                         │
                         ▼
2   ┌──────────────────────────────────┐
    │     Reading of sensing signal    │
    └──────────────────────────────────┘
                         │
                         ▼
3   ┌──────────────────────────────────┐
    │     Calculating of  X', Y'       │
    └──────────────────────────────────┘
                         │
                         ▼
4            ╱─────────────────╲         NO
            ╱     Y' ≦ Y a      ╲──────────►
            ╲                   ╱
             ╲─────────────────╱
                    │ YES
                    ▼
5   ┌──────────────────────────────────┐
    │   Outputting of a reference signal│
    └──────────────────────────────────┘
                    │
                    ▼
6        ╱─────────────────────────╲      NO
        ╱  Output time               ╲────►
       ╱   interval of the    < T a   ╲
        ╲  comparison signal         ╱
         ╲─────────────────────────╱
                    │ YES
                    ▼
7        ╱─────────────────╲
   ◄─────╱     X' <  X       ╲
     NO  ╲                   ╱
          ╲─────────────────╱
                    │ YES
                    ▼
8   ┌──────────────────────────────────┐
    │           X' → X                 │
    │           Y' → Y                 │
    └──────────────────────────────────┘
```

Fig.5

Fig. 6

Fig.7